(19) Europäisches Patentamt
European Patent Office
Office européen des brevets

(11) EP 0 451 871 B1

(12) **EUROPEAN PATENT SPECIFICATION**

(45) Date of publication and mention
of the grant of the patent:
**26.06.1996 Bulletin 1996/26**

(51) Int Cl.⁶: **G11B 5/127**, G11B 5/187, G11B 5/60

(21) Application number: **91105893.1**

(22) Date of filing: **12.04.1991**

(54) **Flying-type composite magnetic head**

Fliegender zusammengesetzter Magnetkopf

Tête magnétique composite volante

(84) Designated Contracting States:
**DE GB**

(30) Priority: **13.04.1990 JP 98053/90**
**20.09.1990 JP 251011/90**

(43) Date of publication of application:
**16.10.1991 Bulletin 1991/42**

(73) Proprietor: **HITACHI METALS, LTD.**
**Chiyoda-ku, Tokyo 100 (JP)**

(72) Inventors:
• **Tomitani, Tadafumi**
**Mouka-shi, Tochigi-ken (JP)**
• **Goto, Ryo**
**Mouka-shi, Tochigi-ken (JP)**

(74) Representative:
**Strehl Schübel-Hopf Groening & Partner**
**Maximilianstrasse 54**
**80538 München (DE)**

(56) References cited:
**EP-A- 0 325 300**      **EP-A- 0 326 140**

• **PATENT ABSTRACTS OF JAPAN vol. 6, no. 160 (E-126) 21 August 1982 & JP-A-57 079 603**
• **PATENT ABSTRACTS OF JAPAN vol. 12, no. 417 (P-782) 7 November 1988 & JP-A-63 155 414**
• **PATENT ABSTRACTS OF JAPAN vol. 6, no. 158 (C-120) 19 August 1982 & JP-A-57 079 144**

**Description**

BACKGROUND OF THE INVENTION

The present invention relates to a flying-type composite magnetic head used in a magnetic disk apparatus in which the flying-type composite magnetic head floats slightly over a rotating magnetic recording medium.

The flying-type composite magnetic head is used such that it floats slightly over a rotating magnetic recording disk (magnetic recording medium) due to an air flow caused by the rotation of the disk.

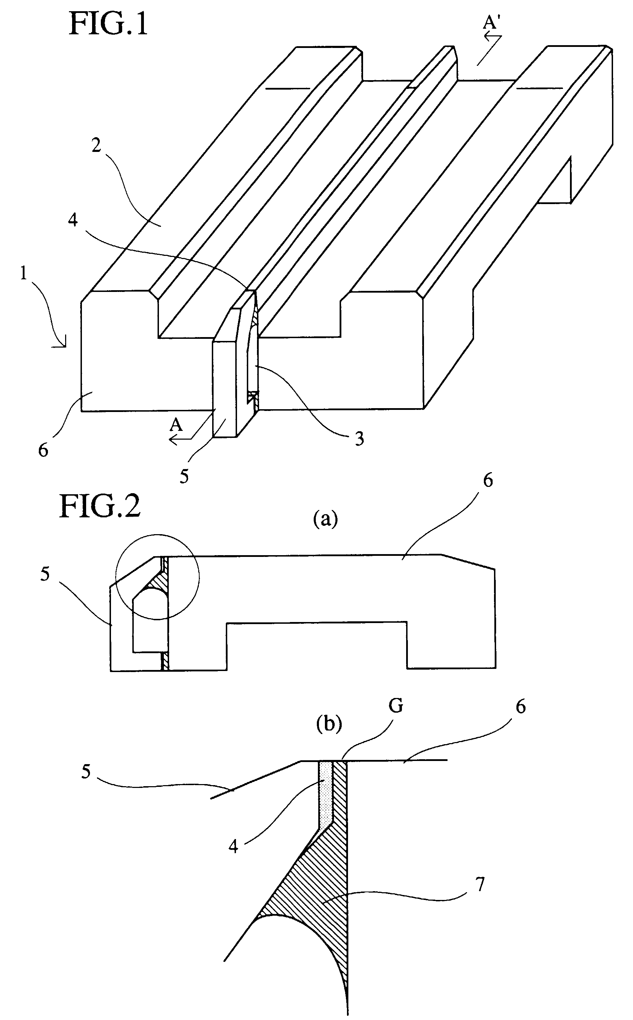

Fig. 1 shows a typical example of the flying-type composite magnetic head. The magnetic head 1 is constituted by an I-shaped core 6 for constituting a slider portion and a C-shaped core 5. The details of the bonding of the I-shaped core 6 and the C-shaped core 5 are shown in Figs. 2 (a), (b). In Figs. 2 (a), (b), a surface of the C-shaped core 5 made of Mn-Zn ferrite which is opposing a surface of the I-shaped core 6 made of Mn-Zn ferrite is coated with a thin, magnetic metal layer 4. The I-shaped core 6 and the C-shaped core 5 are bonded together via the thin, magnetic metal layer 4 by glass, such that a magnetic gap "G" is defined therebetween.

The flying-type composite magnetic head formed with a thin, magnetic metal layer as shown in Fig. 1 has higher recording-reproducing characteristics than those free from thin, magnetic metal layers.

However, the density of magnetic recording further increases, and recording media having coercive forces exceeding 1200 Oe have been developed. In addition, increasingly smaller track widths, for instance, less than 16 $\mu$m and smaller magnetic gaps have been desired for magnetic heads. As such tendency proceeds, the decrease in reproduced outputs of the magnetic heads becomes remarkable. Accordingly, to increase the reproduced outputs of the flying-type composite magnetic heads, research and development have been conducted on thin, magnetic metal layers (Japanese Patent Laid-Open No. 62-183101, Japanese Patent Laid-Open No. 60-95904, etc.).

However, in the above references, only the magnetic properties of thin, magnetic metal layers themselves are investigated, and the relations between the magnetic properties and stress generated when ferrite core pieces are bonded together by glass to constitute the flying-type composite magnetic heads are not investigated.

Also, with respect to a thin film head, in which a thin, magnetic metal layer is a main magnetic path, there are some references in which a stress exerted on the thin, magnetic metal layer is considered and a magnetostriction constant of the thin, magnetic metal layer is defined to a particular range. Among them, Japanese Patent Laid-Open No. 62-229511 discloses an inductive thin film head in which a thin, magnetic metal layer has a negative magnetostriction constant. This thin, magnetic metal layer having a negative magnetostriction constant is totally different from that of the present invention, which has a positive magnetostriction constant as described below. Also, this thin film head is of the magnetic induction type, in which a main magnetic path is constituted by the thin, magnetic metal layer, different from a bulk-type magnetic head according to the present invention, in which a main magnetic path is constituted by the Mn-Zn ferrite core pieces.

Japanese Patent Laid-Open No. 60-74110 discloses a thin film head, in which a thin, magnetic metal layer has a magnetostriction constant $\lambda$s whose absolute value $|\lambda s| \leq 0.4 \times 10^{-6}$. In this reference, the thin, magnetic metal layer is required to have such a magnetostriction constant near 0 as to prevent a permeability of the thin, magnetic metal layer from being reduced due to the stress generated in the production process of the thin film head. On the other hand, in the present invention, the magnetostriction constant of the thin, magnetic metal layer is restricted to a positive small range by taking into consideration the stress exerted on the thin, magnetic metal layer.

A flying-type composite magnetic head according to the preamble of claim 1 is known from EP-A-0 325 300.

OBJECT AND SUMMARY OF THE INVENTION

An object of the present invention is to provide a flying-type composite magnetic head in which the magnetostriction constant of the thin, magnetic metal layer is optimized by taking into consideration the stress exerted on the thin, magnetic metal layer, thereby drastically increasing the recording-reproducing characteristics of the magnetic head.

Thus, a flying-type composite magnetic head according to the present invention is laid down in claim 1.

BRIEF DESCRIPTION OF THE DRAWINGS

Fig. 1 is a perspective view showing the flying-type composite magnetic head according to one embodiment of the present invention;

Fig. 2 (a) is an enlarged cross-sectional view taken along the line A-A' for showing the details of the magnetic head in the vicinity of its magnetic gap;

Fig. 2 (b) is an enlarged cross-sectional view showing the magnetic gap in Fig. 2 (a);

Fig. 3 is a schematic view showing the distribution of magnetic fluxes in the vicinity of the magnetic gap;

Fig. 4 is a schematic view showing the distribution of stress;

Fig. 5 is a graph showing the shrinkage characteristics of the thin, magnetic metal layer and the bonding glass;
Fig. 6 is a schematic view showing the thermal deformation of the ferrite core coated with the thin, magnetic metal layer;
Fig. 7 is a graph showing the relation between the coercive force and the magnetostriction constant;
Fig. 8 is a graph showing the relation between the reproduced output and the magnetostriction constant;
Fig. 9 is a graph showing the relation between the relative margin and the magnetostriction constant;
Fig. 10 is a graph showing the relation between the ratio of cracking and the thermal expansion coefficient of the bonding glass; and
Fig. 11 is a graph showing the relation between the reproduced output and the thermal expansion coefficient of the bonding glass.

## DETAILED DESCRIPTION OF THE PREFERRED EMBODIMENTS

Both core pieces are preferably made of Mn-Zn ferrite having an average thermal expansion coefficient of 110 x $10^{-7}$/°C to 130 x $10^{-7}$/°C at a temperature between 100°C and 400°C, and the glass for bonding a pair of the core pieces preferably has an average thermal expansion coefficient of 90 x $10^{-7}$/°C to 110 x $10^{-7}$/°C at a temperature between 30°C and 380°C.

The thin, magnetic metal layer preferably has a composition consisting essentially of 4.6-8.0 weight % of A*l*, 4.0-9.0 weight % of Si and the balance being substantially Fe. This Fe-A*l*-Si alloy may further contain 2 weight % or less of at least one of Ti and Ru and/or 2-5 weight % of Cr.

The same effects can be achieved in the present invention by using other thin, magnetic metal layers than the thin Fe-A*l*-Si alloy layer. Their examples are as follows:

(1) An Fe-base, soft magnetic alloy represented by $Fe_x A_y N_z$, wherein A represents at least one element selected from the group consisting of Hf, Zr, Ta, Nb and Ti, N represents a nitrogen element, and x, y and z are atomic % satisfying the following formulae:

$$5 \leq y \leq 15,$$

$$3 \leq z \leq 20,$$

and

$$x + y + z = 100.$$

(2) A Co-base, soft magnetic alloy represented by $Co_x M_y C_z$, wherein M represents at least one element selected from the group consisting of Hf, Zr and Ta, C represents a carbon element, and x, y and z represent the content of each element by atomic % satisfying:

$$5 \leq y \leq 13,$$

$$15 \leq z \leq 25,$$

and

$$x + y + z = 100.$$

(3) An Fe-Ta-C magnetic alloy consisting essentially, by atomic ratio, of 5-15% of Ta, 8-20% of C and balance Fe, in the structure of which there exist Fe having a bcc structure and TaC and $Ta_2C$ carbides.

In the magnetic head of the present invention, there is a tensile stress in the thin, magnetic metal layer in the direction of a track width. By selecting the proper magnetostriction constant of the thin, magnetic metal layer related to the tensile stress in the direction of the track width, the thin, magnetic metal layer can be provided with an improved permeability in the direction of the magnetic gap depth, thereby showing higher reproduced outputs.

This phenomenon will be explained in detail below.

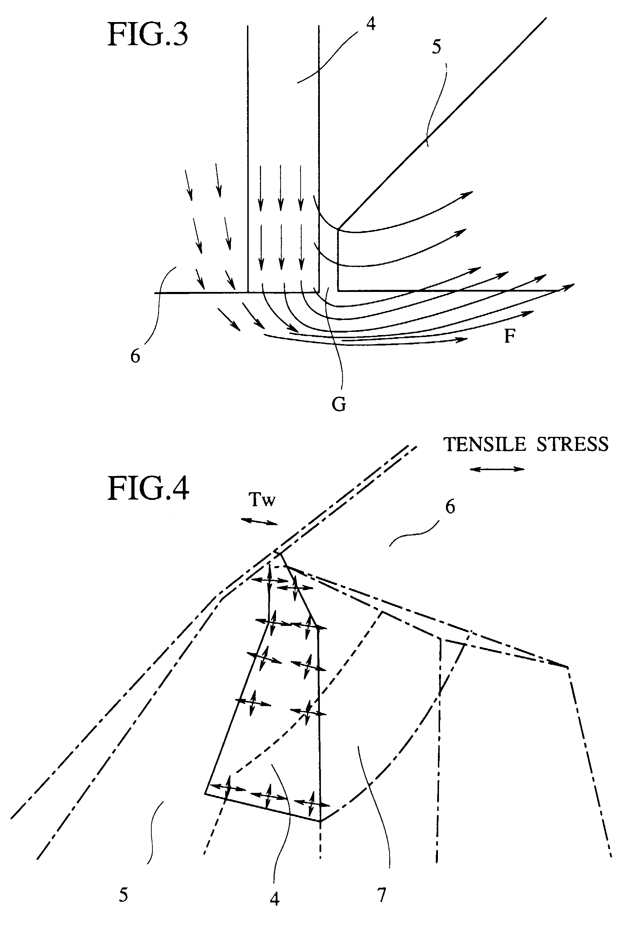

First, the flying-type composite magnetic head was evaluated with respect to its characteristics by a two-dimensional simulation. When an electromagnetic force is 80 mA, a distribution of magnetic fluxes in the vicinity of the magnetic gap G is shown in Fig. 3.

As shown in Fig. 3, when the thin, magnetic metal layer 4 is as thick as about 1 μm or 2 μm, the magnetic fluxes F are concentrated in the vicinity of the thin, magnetic metal layer 4, thereby permitting the magnetic fluxes F to flow along the direction of the magnetic gap depth.

In a high-frequency region, in which this magnetic head is used, the thin, magnetic metal layer shows a higher permeability in the direction of an axis along which magnetization is hard (hereinafter referred to as "hard-magnetization axis") in which magnetisation is mainly generated by the spin rotation, than in an easy-magnetization axis in which magnetization is mainly generated by the movement of the magnetic domain walls. Namely, to make easier the magnetic fluxes to flow along the depth of the magnetic gap G, a hard-magnetization axis of the thin, magnetic metal layer 4 should be directed along the magnetic gap depth.

Fig. 4 shows the stress analysis results of the thin, magnetic metal layer by a three-dimensional simulation. In Fig. 4, a portion encircled by a solid line represents a thin, magnetic metal layer 4, and 5 denotes a C-shaped core, 6 an I-shaped core and 7 a reinforcing (bonding) glass. Arrows in the thin, magnetic metal layer 4 represent the directions and levels of stresses applied to the thin layer 4. It is clear from Fig. 4 that tensile stress is exerted on the overall surface of the thin, magnetic metal layer 4, and that particularly strong tensile stress is generated in the direction of the track width Tw.

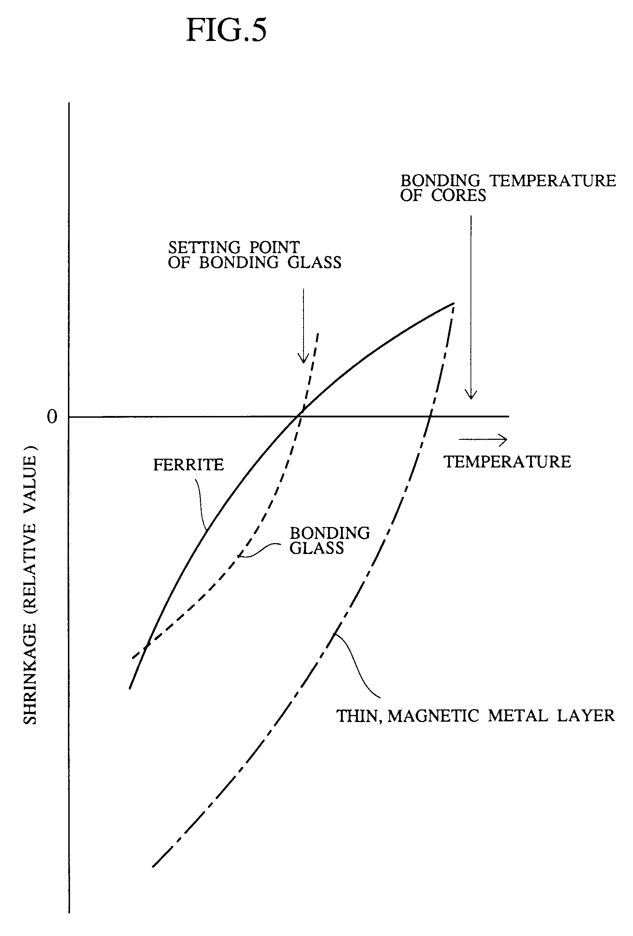

Fig. 5 shows the thermal expansion curves of the ferrite (A), the bonding glass (B) and the thin, magnetic metal (Fe-Al-Si) layer (C). As is clear from Fig. 5, the thin, magnetic metal layer (C) has the largest thermal expansion coefficient among them.

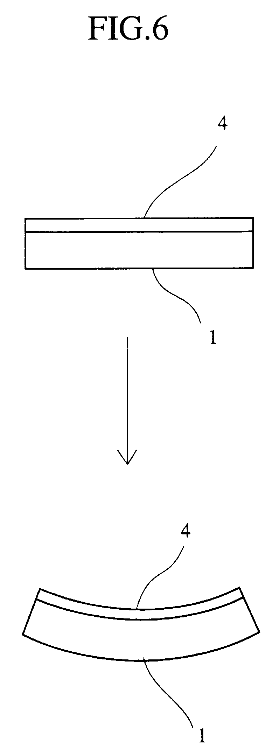

Fig. 6 schematically shows the deformation of the ferrite substrate 1 coated with a thin, magnetic metal layer 4, which is subjected to a heat treatment at a predetermined temperature corresponding to the glass bonding temperature. Fig. 6 shows that a tensile stress is generated in the thin, magnetic metal layer 4. This experimental result well coincides with the stress analysis result shown in Fig. 4.

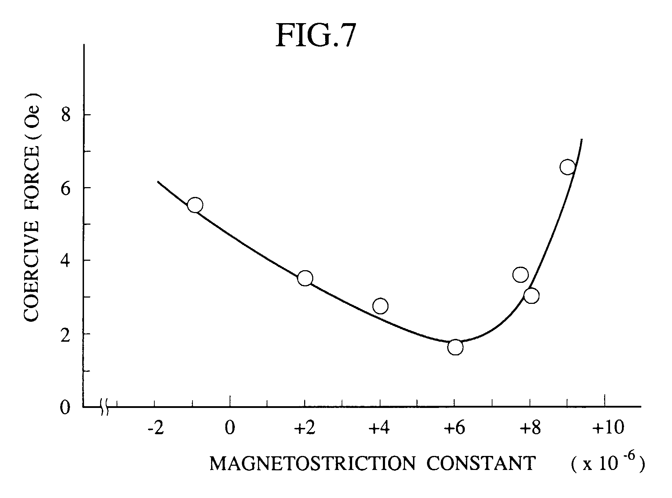

Fig. 7 shows the relation between the magnetic properties and the magnetostriction constant of the thin, magnetic metal layer formed on the Mn-Zn ferrite core shown as No. 5 in Table 2. The magnetostriction constant was measured by an optical lever method on the thin, magnetic metal layer formed on the non-magnetic substrate (No. 5 in Table 2) and subjected to a heat treatment at a predetermined temperature (bonding temperature). As is clear from Fig. 7, in a positive region of the magnetostriction constant, the thin, magnetic metal layer has the desired magnetic properties (low coercive force). It is presumed that the recording-reproducing characteristics of the flying-type composite magnetic head provided with the thin, magnetic metal layer having the magnetostriction constant in this range are improved due to the fact that the magnetic fluxes can easily flow in the direction of the magnetic gap depth.

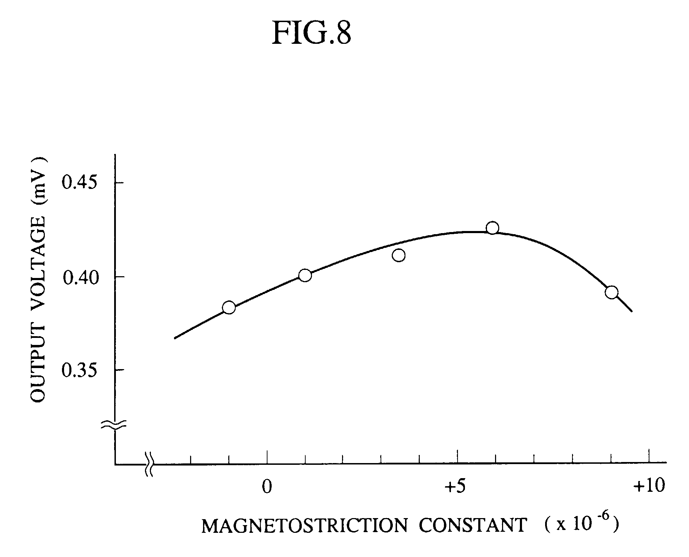

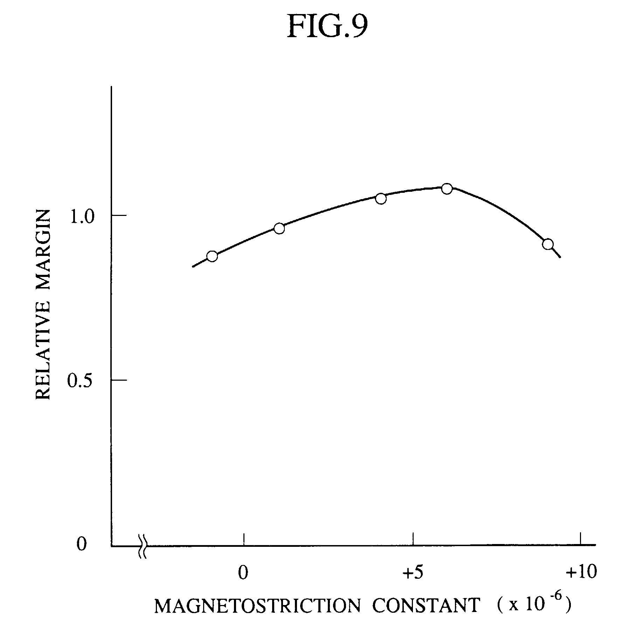

When the magnetostriction constant of the thin, magnetic metal layer is $+2 \times 10^{-6}$ to $+8 \times 10^{-6}$, as in the present invention, the recording-reproducing characteristics are extremely high as shown by Figs. 8 and 9 below.

This phenomenon is considered to be due to the function of the stress exerted on the thin, magnetic metal layer. Specifically speaking, the tensile stress along the track width is larger than the stress in the direction of the magnetic gap depth. Accordingly, when the thin, magnetic metal layer has a positive magnetostriction constant, its easy-magnetisation axis is directed along the track width and its hard-magnetisation axis is directed along magnetic gap depth. In a case where the hard-magnetization axis is directed along the magnetic gap depth, it is presumed that the thin, magnetic metal layer shows an increased permeability in the direction of the magnetic gap depth at the frequency level of MHz, at which the magnetic head is operated. As a result, the magnetic fluxes can easily flow along the magnetic gap depth.

Further, according to the present invention, by using the Mn-Zn ferrite and a bonding glass each having a proper thermal expansion coefficient, the thin, magnetic metal layer is firmly adhered to the ferrite core piece, thereby preventing the bonding glass from being cracked.

Also, the thin, magnetic metal layer has a high permeability, a high saturation magnetic flux density and an extremely improved corrosion resistance.

The present invention will be explained in detail referring to the drawings.

Fig. 1 is a perspective view showing the overall structure of the flying-type composite magnetic head according to one embodiment of the present invention. Fig. 2 shows the details of the bonding portion of the C-shaped core 5 and the I-shaped core 6. The flying-type composite magnetic head 1 is constituted by the C-shaped core 5 and the I-shaped core 6 both made of Mn-Zn ferrite, and the I-shaped core 6 is constituted by a slider whose end surface opposes to the C-shaped core 5. 4 denotes a thin Fe-Al-Si alloy layer coated on the C-shaped core 5. The flying-type composite magnetic head 1 has a window 3 for windings, which is defined by the C-shaped core 5 and the I-shaped core 6, and the glass portion 7 for bonding the C-shaped core 5 and the I-shaped core 6 is provided in the window 3 near the magnetic gap G. Incidentally, the flying-type composite magnetic head in this Example has the following shape:

| Track width | Tw: | 14 μm. |
| Magnetic gap length | Gl: | 0.60 μm. |
| Magnetic gap depth | Gd: | 6 μm. |
| Core height: | | 1.6 mm |

This flying-type composite magnetic head may be produced, for instance, by the following procedures:

First, an Mn-Zn ferrite block is worked to a predetermined size to produce a C-shaped core block and an I-shaped core block. Either one of these core blocks may be formed with a thin, magnetic metal layer. In the preferred embodiment, the C-shaped core block is coated with a thin, magnetic metal layer in a thickness of about 2 μm.

The typical conditions of forming the thin, magnetic metal layer are as follows:

RF power                                    400 W.

Distance between target
and substrate                              70 mm.

Substrate temperature         300°C

Degree of vacuum              $5 \times 10^{-4}$ Pa.

Gas pressure                   $7 \times 10^{-1}$ Pa.

Next, the C-shaped core block and the I-shaped core block are glass-bonded. The resulting bonded blocks are worked and ground to the shape of the flying-type composite magnetic head.

With respect to the flying-type composite magnetic head produced by the above procedures, the present invention will be further explained by way of the following Examples.

Example 1

A non-magnetic ferrite substrate was coated with a thin Fe-A*l*-Si alloy layer (Sendust) having a magnetostriction constant of $-1 \times 10^{-6}$ to $+9 \times 10^{-6}$ as shown in Table 1, and a heat treatment was conducted at a temperature for bonding the C-shaped core block and the I-shaped core block.

Table 1

| No. | Composition (weight %) | | | | | Magnetostriction Constant (x $10^{-6}$) |
|---|---|---|---|---|---|---|
| | Fe | A*l* | Si | Ti | Ru | |
| 1 | 82.9 | 6.4 | 9.7 | 0.7 | 0.3 | -1 |
| 2 | 82.7 | 7.8 | 8.5 | 0.7 | 0.3 | +2 |
| 3 | 85.5 | 4.8 | 8.7 | 0.7 | 0.3 | +2 |
| 4 | 85.2 | 6.4 | 7.4 | 0.7 | 0.3 | +4 |
| 5 | 87.0 | 6.2 | 5.8 | 0.7 | 0.3 | +6 |
| 6 | 89.5 | 5.0 | 4.5 | 0.7 | 0.3 | +8 |
| 7 | 86.9 | 7.8 | 4.3 | 0.7 | 0.3 | +8 |
| 8 | 91.0 | 4.4 | 3.6 | 0.7 | 0.3 | +9 |

Each sample was heated to 300°C which was higher than the Curie temperature of the Mn-Zn ferrite. With respect to each sample, a magnetization curve was measured to determine its coercive force. Fig. 7 shown the relations between the coercive force and the magnetostriction constant of the Sendust layer.

As is clear from Fig. 7, the coercive force is at a low level in a magnetostriction constant range of $+2 \times 10^{-6}$ to $+8 \times 10^{-6}$. Further, in the magnetostriction constant range of $+4 \times 10^{-6}$ to $+6 \times 10^{-6}$, an extremely small coercive force can be achieved.

With respect to the flying-type composite magnetic head produced by the above procedure, Fig. 8 shows the relation between the magnetostriction constant of the thin, magnetic metal layer and the reproduced outputs, and Fig. 9 shows the relations between the magnetostriction constant and a relative margin.

Incidentally, the conditions of measuring characteristics were as follows:

| | |
|---|---|
| Coercive force of recording medium | 96 kA/m (1200 Oe) |
| Peripheral speed | 9.4 m/s. |
| Floating height | 0.17 μm. |

(continued)

| Number of windings | 21 x 2 turns |
|---|---|
| Frequency | LF: 1 MHz. |
| | HF: 4 MHz. |

Under the above measurement conditions, the reproduced output of the flying-type composite magnetic head is at a high level when the magnetostriction constant of the thin Fe-A*l*-Si alloy layer is in the range between $+2 \times 10^{-6}$ and $+8 \times 10^{-6}$ as shown in Fig. 8. Further, the relative margin of the flying-type composite magnetic head is high when the magnetostriction constant of the thin Fe-A*l*-Si alloy layer is in the range between $+2 \times 10^{-6}$ and $+8 \times 10^{-6}$ as shown in Fig. 9.

The composition of the thin Fe-A*l*-Si alloy layer showing the magnetostriction constant of the above range is 4.6-8.0 weight % of A*l*, 4.0-9.0 weight % of Si and the balance being substantially Fe. Thus, when the magnetostriction constant of the thin Fe-A*l*-Si alloy layer is in the range of $+2 \times 10^{-6}$ to $+8 \times 10^{-6}$, and when the composition thereof is A*l*: 4.6-8.0 weight %, Si: 4.0-9.0 weight %, and Fe: substantially balance, high reproduced outputs can be achieved.

Example 2

In the production of the magnetic head, a heat treatment step such as a glass bonding step is necessary. In this heat treatment step, the thin Fe-A*l*-Si alloy layer is likely to peel off from the Mn-Zn ferrite core due to the difference in a thermal expansion coefficient between the Mn-Zn ferrite core and the thin Fe-A*l*-Si alloy layer. As shown in Fig. 5, the thermal expansion coefficient of the Mn-Zn ferrite is lower than that of the thin Fe-A*l*-Si alloy layer. Accordingly, to determine the lower limit of the thermal expansion coefficient of the Mn-Zn ferrite core, from which the thin Fe-A*l*-Si alloy layer does not peel off, the following tests were conducted.

Using an Mn-Zn ferrite having a thermal expansion coefficient of $95 \times 10^{-7}/°C$ to $135 \times 10^{-7}/°C$ as shown in Table 2, an I-shaped core block as described in connection with the above production procedure was produced. Each I-shaped core block was formed with a 2-μm-thick Fe-A*l*-Si alloy layer by a magnetron sputtering apparatus. The thin Fe-A*l*-Si alloy layer had a composition of 85 weight % of Fe, 6 weight % of A*l* and 9 weight % of Si, and had a magnetostriction constant $λs$ of $+2 \times 10^{-6}$.

Table 2

| No. | Composition (weight %) | | | Magnetic Properties | | Thermal Expansion Coefficient (x $10^{-7}/°C$) |
|---|---|---|---|---|---|---|
| | MnO | ZnO | $Fe_2O_3$ | μ (5MHz) | $B_{10}$ (T) | (100→400°C) |
| 1 | 24 | 26 | 50 | 300 | 0.30 | 95 |
| 2 | 27 | 22 | 51 | 350 | 0.39 | 105 |
| 3 | 28 | 20 | 52 | 680 | 0.44 | 110 |
| 4 | 29 | 18 | 53 | 800 | 0.48 | 115 |
| 5 | 31 | 16 | 53 | 1050 | 0.50 | 120 |
| 6 | 33 | 13 | 54 | 1000 | 0.54 | 125 |
| 7 | 34 | 11 | 55 | 900 | 0.55 | 130 |
| 8 | 35 | 9 | 56 | 800 | 0.56 | 135 |

The I-shaped core block formed with the thin Fe-Al-Si alloy layer was subjected to a heat treatment at 600°C for 60 minutes to investigate the peeling of the thin Fe-A*l*-Si alloy layer. The results are shown in Table 3. In Table 3, ○ denotes no peeling, Δ denotes peeling only in end portions of the thin Fe-A*l*-Si alloy layer, and x denotes the peeling of the thin Fe-A*l*-Si alloy layer on the entire surface.

Table 3

| No. | Peeling |
|---|---|
| 1 | x |
| 2 | Δ |
| 3 | ○ |
| 4 | ○ |
| 5 | ○ |

Table 3   (continued)

| No. | Peeling |
|---|---|
| 6 | ○ |
| 7 | ○ |
| 8 | ○ |

As is clear from Table 3, the lower limit of the thermal expansion coefficient of the ferrite up to which the thin Fe-Al-Si alloy layer can be stably adhered to the ferrite is $110 \times 10^{-7}/°C$. In the case of ferrite materials having thermal expansion coefficients exceeding $135 \times 10^{-7}/°C$, abnormal sintering takes place in the production process of the ferrite, resulting in a poor yield. Further, in the case of a ferrite having a thermal expansion coefficient exceeding $130 \times 10^{-7}/°C$, a peak of its permeability exists in the vicinity of the room temperature, meaning that the permeability of the ferrite largely depends on the temperature at which the magnetic head is operated. Accordingly, the preferred thermal expansion coefficient of the ferrite is $130 \times 10^{-7}/°C$ or less. Namely, the range of the thermal expansion coefficient in which the peeling of the thin Fe-Al-Si alloy layer does not take place, and in which the ferrite can be produced at a stably high yield is $110 \times 10^{-7}/°C$ to $130 \times 10^{-7}/°C$.

Example 3

To investigate the correlation between the thermal expansion coefficient of glass for bonding the C-shaped core and the I-shaped core and the output of the resulting magnetic head, bonding glasses as shown in Table 4 were used to produce magnetic heads. Used in this experiment was a thin Fe-Al-Si alloy layer having a magnetostriction constant of $+4 \times 10^{-6}$, and ferrite material (No. 4 shown in Table 2) having a thermal expansion coefficient of $115 \times 10^{-7}/°C$. The conditions of measuring characteristics are the same as in Example 1.

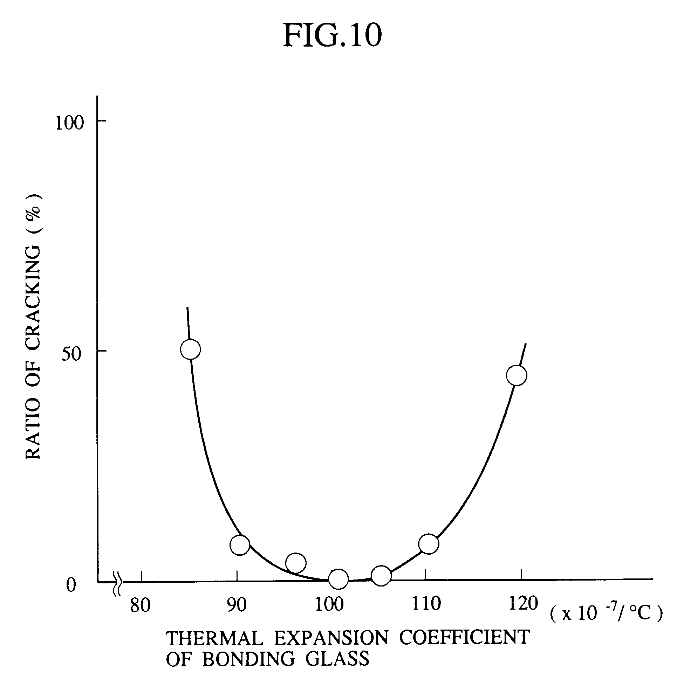

Fig. 10 shows the correlation of the thermal expansion coefficient of the bonding glass and the ratio of glass cracking at the time of machining the magnetic head. It is clear from Fig. 10 that the ratio of cracking occurred in the bonding glass is extremely high when the thermal expansion coefficient of the bonding glass is less than $85 \times 10^{-7}/°C$ or higher than $119 \times 10^{-7}/°C$.

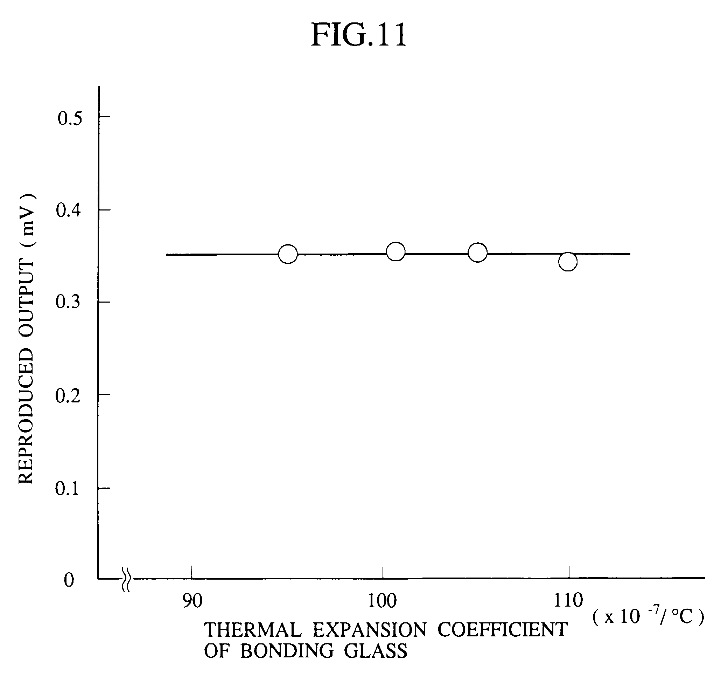

Four types of bonding glasses (Nos. 3, 4, 5 and 6) were selected from those listed in Table 4, and the characteristics of the magnetic heads using such glasses were evaluated. The results are shown in Fig. 11. It is clear from Fig. 11 that the reproduced output is high when the bonding glass has a thermal expansion coefficient in the range of $90 \times 10^{-7}/°C$ to $110 \times 10^{-7}/°C$.

Table 4

| No. | $SiO_2$ | $GeO_2$ | $B_2O_3$ | $Na_2O$ | $K_2O$ | $SrO$ | $BaO$ | $PbO$ | Softening Point (°C) | Thermal Expansion Coefficient ($\times 10^{-7}$/°C) (30→380°C) |
|---|---|---|---|---|---|---|---|---|---|---|
| 1 | 31 | – | 26.5 | 8 | – | – | – | 34.5 | 575 | 85 |
| 2 | 34 | – | 19.9 | 9 | – | – | – | 37.5 | 571 | 90 |
| 3 | 37 | – | 13 | 10 | – | – | – | 40 | 573 | 96 |
| 4 | 38 | – | 13.5 | 11.5 | – | – | – | 37 | 578 | 101 |
| 5 | 40 | – | 15 | 12 | 2.5 | – | – | 30.5 | 576 | 105 |
| 6 | 37 | – | 16 | 12 | 3 | – | 7.5 | 24.5 | 575 | 111 |
| 7 | 32 | 15.5 | 10 | 11 | 4.5 | 6.5 | 12 | 8.5 | 580 | 119 |

As described above in detail, according to the present invention, by analyzing the stress distribution exerted on the thin, magnetic metal layer formed on the core piece, and by selecting the thin, magnetic metal layer having a magnetostriction constant range in which good magnetic properties can be obtained, the resulting flying-type composite magnetic head can be provided with good recording-reproducing characteristics even when it is used in a magnetic recording apparatus having a recording medium having an increased coercive force for higher density of recording, and even when it is provided with a small track width and a small magnetic gap.

## Claims

1. A flying-type composite magnetic head comprising a pair of core pieces (5, 6), a glass portion (7) for bonding said core pieces, and a thin, magnetic metal layer (4) formed on an opposing surface of at least one of said core pieces, characterised in that

   said thin, magnetic metal layer (4) has a magnetostriction constant of $+2 \times 10^{-6}$ to $+8 \times 10^{-6}$ and a thermal expansion coefficient larger than those of said pair of core pieces (5, 6) and said glass portion (7), wherein the easy-magnetisation axis and the hard-magnetisation axis of said thin, magnetic metal layer are aligned into track width direction and magnetic gap depth direction, respectively.

2. The magnetic head of claim 1, wherein said core pieces (5, 6) are made of Mn-Zn ferrite having a thermal expansion coefficient of $110 \times 10^{-7}/°C$ to $130 \times 10^{-7}/°C$.

3. The magnetic head of claim 1 or 2, wherein said glass portion (7) for bonding said core pieces (5, 6) has a thermal expansion coefficient of $90 \times 10^{-7}/°C$ to $110 \times 10^{-7}/°C$.

4. The magnetic head of any of claims 1 to 3, wherein said thin, magnetic metal layer (4) is made of an alloy consisting essentially of 4.6-8.0 weight % of Al, 4.0-9.0 weight % of Si and the balance being substantially Fe.

5. The magnetic head of claim 4, wherein said alloy of the thin, magnetic metal layer (4) further contains 2 weight % or less of at least one of Ti and Ru and/or 2-5 weight % of Cr.

## Patentansprüche

1. Fliegender, zusammengesetzter Magnetkopf mit einem Paar von Kernstücken (5, 6), einem Glasbereich (7) zum Verbinden der Kernstücke und einer an einer gegenüberliegenden Oberfläche wenigstens eines Kernstücks ausgebildeten, dünnen magnetischen Metallschicht (4),

   **dadurch gekennzeichnet,** daß

   die dünne magnetische Metallschicht (4) eine Magnetostriktionskonstante von $+2 \times 10^{-6}$ bis $+8 \times 10^{-6}$ und einen thermischen Ausdehnungskoeffizienten, der größer als der des Paares von Kernstücken (5, 6) und des Glasbereichs (7) ist, aufweist, wobei die leicht zu magnetisierende Achse und die schwer zu magnetisierende Achse der dünnen, magnetischen Metallschicht in Richtung der Spurbreite bzw. in Richtung der magnetischen Lücke ausgerichtet sind.

2. Magnetkopf gemäß Anspruch 1, wobei die Kernstücke (5, 6) aus Mn-Zn Ferrit mit einem thermischen Expansionskoeffizienten von $110 \times 10^{-7}/°C$ bis $130 \times 10^{-7}/°C$ hergestellt sind.

3. Magnetkopf gemäß einem der Ansprüche 1 oder 2, wobei der Glasbereich (7) zum Verbinden der Kernstücke (5, 6) einen thermischen Expansionskoeffizienten von $90 \times 10^{-7}/°C$ bis $110 \times 10^{-7}/°C$ aufweist.

4. Magnetkopf gemäß einem der Ansprüche 1 bis 3, wobei die dünne, magnetische Metallschicht (4) aus einer Legierung hergestellt ist, die im wesentlichen aus 4,6 bis 8,0 Gew.-% Al, 4,0-9,0 Gew.-% Si und dem im wesentlichen aus Fe bestehenden Rest hergestellt ist.

5. Magnetkopf gemäß Anspruch 4, wobei die Legierung der dünnen magnetischen Metallschicht (4) weiter 2 Gew.-% oder weniger Ti und/oder Ru und/oder 2-5 Gew.-% Cr enthält.

## Revendications

1. Tête magnétique composite volante comportant une paire de noyaux (5, 6), une partie en verre (7) pour réunir lesdits noyaux, et une fine couche magnétique métallique (4) formée sur une surface en regard d'au moins un desdits noyaux,

caractérisée en ce que

ladite fine couche magnétique métallique (4) a une constante de magnétostriction de $+2 \times 10^{-6}$ à $+8 \times 10^{-6}$ et un coefficient de dilatation thermique supérieur à ceux de ladite paire de noyaux (5, 6) et de ladite partie en verre (7), l'axe d'aimantation facile et l'axe d'aimantation difficile de ladite fine couche magnétique métallique étant respectivement alignés dans le sens de la largeur de la piste et dans le sens de la profondeur de l'entrefer.

2. Tête magnétique selon la revendication 1, dans laquelle lesdits noyaux (5, 6) sont en ferrite de Mn-Zn à coefficient de dilatation thermique de $110 \times 10^{-7}/°C$ à $130 \times 10^{-7}/°C$.

3. Tête magnétique selon la revendication 1 ou 2, dans laquelle ladite partie en verre (7) pour réunir lesdits noyaux (5, 6) a un coefficient de dilatation thermique de $90 \times 10^{-7}/°C$ à $110 \times 10^{-7}/°C$.

4. Tête magnétique selon l'une quelconque des revendications 1 à 3, dans laquelle ladite fine couche magnétique métallique (4) est en alliage essentiellement composé de 4,6 à 8,0% en poids de Al, de 4,0 à 9,0% en poids de Si, le reste étant sensiblement constitué de Fe.

5. Tête magnétique selon la revendication 4, dans laquelle ledit alliage de la fine couche magnétique métallique (4) contient en outre 2% en poids ou moins de Ti et/ou de Ru et/ou 2 à 5% en poids de Cr.

FIG.1

FIG.2

(a)

(b)

FIG.3

4

5

6

F

G

FIG.4

TENSILE STRESS

Tw

6

5

4

7

# FIG.5

# FIG.6

# FIG.7

# FIG.8

# FIG.9

# FIG.10

# FIG.11